# EUROPEAN PATENT APPLICATION

(11) **EP 3 636 333 A1**
(43) Date of publication of application: **15.04.2020**
(21) Application number: 18199636.4
(22) Date of filing: 10.10.2018
(51) Int. Cl.: B01D 53/04, B01D 53/26, B65D 51/28, B65D 51/30, H01M 2/10

(54) **AIR DRYER, ELECTRIC SYSTEM AND PRODUCTION PROCESS OF AN ELECTRIC SYSTEM**

(71) Applicant: Mann+Hummel GmbH, 71636 Ludwigsburg (DE)
(72) Inventor: Paul Kallumgal, Basil, 560016 Bangalore (IN); Bauditsch, Peter, 74357 Bönnigheim (DE)
(74) Representative: Seyboth, Matthias

(57) **Abstract**

An air dryer (1) for the positioning in a housing (60) of an electric system (68), in particular a battery housing,
wherein the air dryer (1) comprises a housing (2) with at least one housing wall (23), defining a reception cavity (4) for the reception of a desiccant, wherein the housing wall (23) is provided with at least one opening (10, 11);
wherein the air dryer (1) further comprises a cover (3) with at least one cover wall (24) arranged over the outer or inner surface of the housing (2) and at least partially covering the housing wall (23), wherein the cover wall (24) is provided with at least one opening (8, 9)
wherein
the cover (3) is movable arranged with respect to the housing (2) or the housing (2) is movable arranged with respect to the cover (3) with at least two positions wherein
in a first of said positions (400) the openings (8, 9, 10, 11) of the housing wall (23) and the cover wall (24) are aligned allowing air to enter and/or leave the reception cavity (4) and
in a second of said positions (300) the openings (8, 9, 10, 11) are out of alignment to prevent air from entering the reception cavity (4); an electric system (68) and

a production process of said electric system (68).

## Description

### Technical field

The current invention relates to an air dryer, an electric system and to a production process of an electric system.

### State of the art

Battery air dryers are known in the state of the art. There are some dryers which have a housing with a cavity and a desiccant such as a drying agent in a nonwoven bag can be placed inside the cavity of the housing. The problem is that during the production of an electric system the dryer can be placed inside the housing at an early state of the production process. During the production time the air dryer is already active although there is no need for drying during the production. In this case the desiccant is already partly loaded before the air-drying is needed.

### Disclosure of the invention

To solve the problem it is necessary to provide an air dryer which can be installed at an early state of the production process but which is activated at a suitable time.

The current invention provides a solution to this problem by means of an air dryer with the features of claim 1, an electric system with the features of claim 13 and with a production process of the electric system with the features of claim 17.

The air dryer according to the invention can preferably be provided for the positioning in a housing of an electric system. Such an electric system can preferably be a battery housing.

The inventive air dryer comprises a housing with at least one housing wall, having a reception cavity for the reception of a desiccant. The reception cavity can be accessed by an opening which can be closed with a lid.

The housing wall is provided with at least one opening. The opening allows the air from the inside of the electric system to enter the cavity in order to be dried by the desiccant.

Said openings should hold the desiccant back. The desiccant can preferably be provided in a bag of air-permeable material, for example a nonwoven fabric. Alternatively the desiccant can be provided as a bulk.

The air dryer further comprises a cover with at least one cover wall arranged over the outer or inner surface of the housing. Both options are possible. In a first option the cover can cover the openings in the housing from the outside and in a second option from the inside. In the second case the cover is positioned inside the reception cavity.

It is preferable that the cover can be moved in relation to the housing. It is however also possible that the housing can be moved in relation to the cover.

The cover is at least partially covering the housing wall wherein the cover wall of the cover is also provided with at least one opening.

The cover may be movably arranged in relation to the housing or the housing may be movably arranged in relation to the cover in at least two positions.

In the first of the positions the openings of the housing wall and the cover wall are aligned allowing the air to enter and/or to leave the reception cavity and in the second of the positions the openings are out of alignment to prevent air from entering the reception cavity.

In this way the inventive air dryer can be activated in contrast to known air dryers in the state of the art. A deactivated air dryer can be mounted and remain at a position in the electric system until the production process is finished. The air dryer can be activated at will, especially at the end of the production. In this way the desiccant inside the reception cavity can evolve its full effectiveness.

Further embodiments of advantage are subject matter of the dependent claims.

The cover can be arranged slidable with respect to the housing or the housing can be arranged slidable in relation to the cover. Most preferably the cover can be arranged rotatable in relation to the housing or the housing can be arranged rotatable in relation to the cover. This movement is space-saving so that the air dryer can have a compact construction.

For a better exchange of air the housing wall and/or the cover wall comprises at least 5%, preferably 10% of an open area, for example a plurality of openings inside the cover and/or the housing wall.

Both the housing and the cover can have at least two sections; a base area, also called planar front face, and a lateral area, wherein in both areas the walls are provided with at least one opening, preferably a plurality of openings.

The air dryer can be provided with an activation element that is adapted to move the cover respectively to the housing from the second position to the first position.

The activation element can be movably arranged for a translational movement, especially a linear movement, wherein this motion is converted to a rotational movement of the cover. In this way a pressure on the activation element can activate the air dryer.

The activation element can comprise a knob, preferably a spring-loaded knob, which is movable relative to the housing and/or cover, wherein the knob interacts with the housing and/or the cover, preferably by means of a toothing such as a spur toothing with asymmetrical tooth profile in order to move the cover in relation to the housing from the second position to the first position. This movement is known from other elements, such as a ballpen. The handling of such an activation element is simple and easy to understand for users.

The cover and the housing can have a cylindrical form arranged coaxially to each other, wherein the cover and/or the housing have at least one tooth, including a tooth shoulder, preferably an annular gear with a plurality of the teeth.

The activation element can be provided with at least one tooth having a tooth shoulder, preferably an annular gear with a plurality of the teeth.

The activation element can be arranged movable parallel to the axis of the housing in a way that in a first position the tooth of the activation element is engaged with said tooth of the housing and/or cover.

The tooth shoulder of the activation element can be slidably arranged on the tooth shoulder of the housing and/or cover, providing a rotation movement of the cover with regard to the housing around the axis.

In the second position, where the dryer is in the deactivated state, the tooth of the activation element can be disengaged from the tooth of the housing and/or cover.

The activation element, in particular the knob, can preferably be provided with at least a first snap-in or latching element for connecting the activation element with the housing in a disengaged position and wherein the activation element, in particular the knob, is provided with at least a second snap-in or latching element for holding the activation element in an engaged and/or connected position forming the toothing with the tooth of the housing and/or cover.

The activation element, in particular the knob, can preferably be provided with a rectangular shaft which is positioned in an opening of the housing of the electric system so that an undesired torsion of the activation element is hindered.

The housing can comprise at least one attachment element for the attachment of the air dryer to the housing of the electric system, preferably in a flange-like manner.

Another aspect of the current invention is to provide an electric system, in particular a battery and preferably for a vehicle, which comprises a housing with a cavity, wherein the inventive air dryer is positioned inside said cavity.

The housing of the electric system can be provided with an opening wherein the activation element is positioned in relation to the opening such that the activation element can be operated from the outside of the housing of the electric system and wherein preferably the arranged activation element is gastight inside the housing.

The opening in the housing of the electric system can be covered with an elastic sealing element which is positioned above the activation element such that pressure applied to the elastic sealing element is activating the air dryer.

In this way the activation element is accessible from the outside of the housing of the electric system but the cavity is closed airtight.

Another aspect of the invention is a production process of said inventive electric system, wherein the process is characterized by the following steps:
i. Providing parts of the housing of the electric system, especially before said parts are mounted to the complete electric system;
ii. Integration of the air dryer at an inner side of a housing wall of the housing of the electric system and/or in a part of an element, especially a battery element, which is to be positioned in the battery cavity;
iii. Mounting of different parts of the electric system to form the cavity with the air dryer positioned inside said cavity;
iv. Activation of the air dryer by moving the cover of the battery air dryer from the second to the first position.

The activation in Step iv. can preferably be done after the cavity is closed airtight with all parts of the electric system that have to be positioned inside the cavity

### Description of the drawings

An advantageous embodiment of the invention is further explained in detail by means of a drawing. Specific parts of the embodiment can be understood as separate features that can also be realized in other embodiments of the invention. The combination of features described by the embodiment shall not be understood as a limitation for the invention:
- Fig. 1:: an exploded view of the first embodiment of an inventive air dryer;
- Fig. 2:: a partial view of an electric system with a mounted air dryer;
- Fig. 3a - 3e:: a perspective view of the parts of the air dryer;
- Fig. 4:: a perspective view of the air dryer in deactivated state;
- Fig. 5:: a cross-sectional view of the air dryer in deactivated state;
- Fig. 6:: a detailed view of the activation element of Fig. 6;
- Fig. 7:: a perspective view of the air dryer in activated state;
- Fig. 8:: a cross-sectional view of the air dryer in activated state;
- Fig. 9:: a detailed view of the activation element of Fig. 8.

### Embodiment of the invention

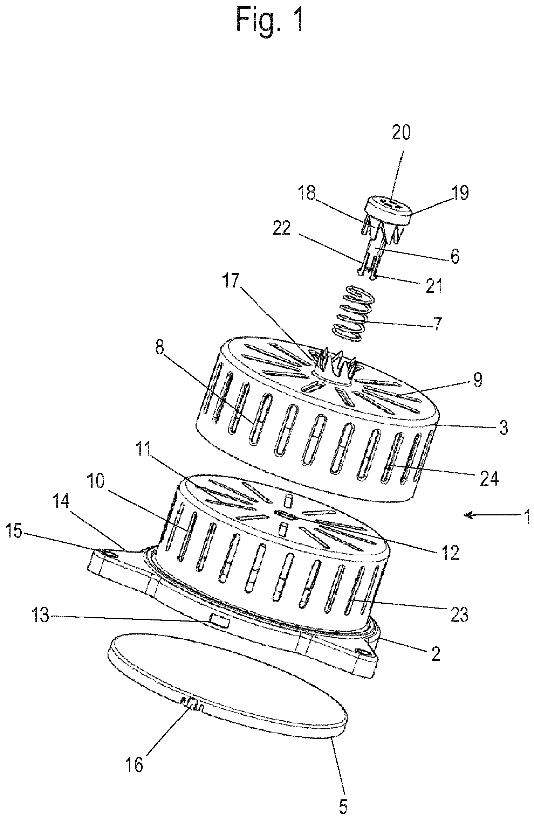

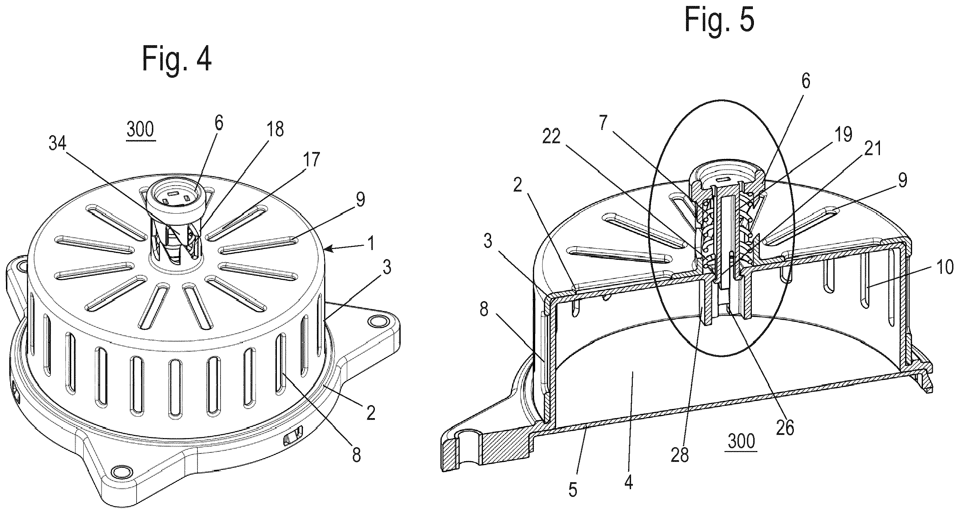

An air dryer 1 according to a first embodiment of the invention is shown in Fig. 1. It comprises a housing 2. The housing 2 defines together with a plate-shaped lid 5 a cavity 4, as shown in Fig. 5.

A desiccant can be positioned in the cavity. The desiccant can be a drying agent provided as a bulk or inside an air-permeable pocket or the like.

The air dryer 1 further comprises an activation element 6, such as a spring-loaded knob. The knob is provided with a knob-head 20 with a pressing surface and a shaft 19 defining a linear axis 600 of the knob. The knob head 20 is provided with an annular projection provided with a number of teeth 18 extending parallel to the said linear axis 600. The annular projection can be formed as a gear profile having a spur toothing, wherein the teeth have preferably an asymmetrical tooth profile.

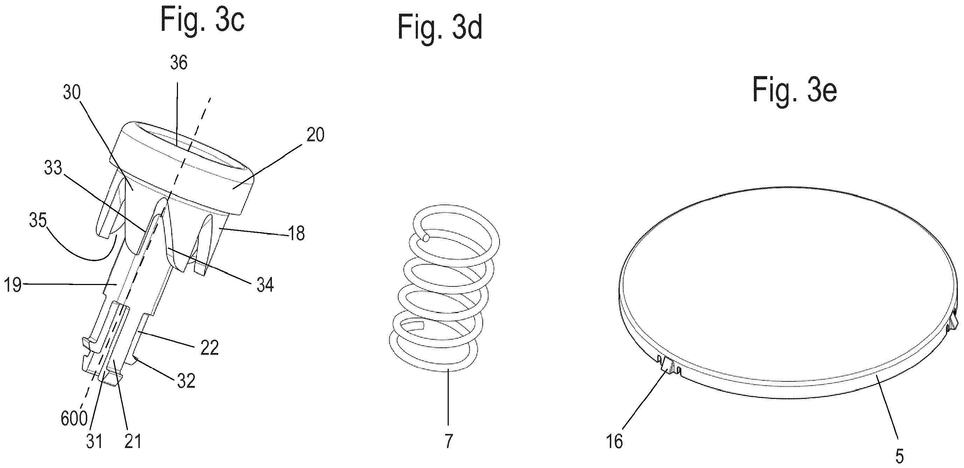

The activation element 6 is shown more in detail in Fig. 3c. The pressing surface 36 can be the main surface of the knob-head 20. The teeth of the annular projection 30 have at least two shoulders 33, 34, wherein a first of the shoulders 33 has a steeper slope than the second of the shoulders 34. The shaft 19 has a rectangular cross-section, so that a skewing of the activation element 6 in relation to the housing 2 is hindered. The shaft 19 is distanced from the teeth 18 of the annular projection 30, so that an annular slot 35 is formed between the teeth 18 and the shaft 19.

The activation element 6, especially the shaft 19, is provided with at least a first snap-in element 22 for connecting the activation element with the housing in a deactivated state of the dryer 1 with the toothing being in disengaged position. The snap-in element 22 could be formed as a cantilever having a fixed end and a free end. The free end is provided with a snapping projection 32.

The activation element 6, especially the shaft 19, can be provided with at least a second snap-in element 21, preferably two second snap-in elements, for holding the activation element in an activated state of the dryer 1, forming a toothing with an engagement of the teeth of the activation element with the teeth of the housing and/or cover. The second snap-in element 21 could also be formed as a cantilever having a fixed end and a free end. The free end is provided with a snapping projection 31.

The snap-in element 21 is longer than the snap-in element 22. Therefore the snap-in element 21 is provided at a distal end of the shaft 19.

Alternatively or additionally to the snap-in elements 21 and 22 the activation element 6 may also be provided with latching elements.

The activation element 6 is spring loaded. A suitable spring 7 is shown in Fig. 1 and 3d. It is preferably a spiral spring 7. The spring 7 is positioned at one end in the annular slot 35 and at a front face of the cover 3.

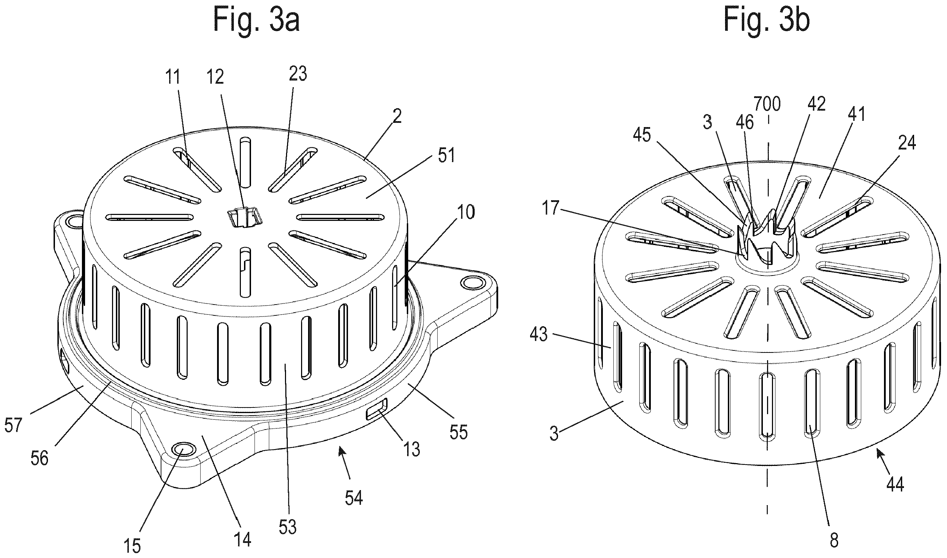

The cover 3 is shown in more detail in Fig. 3b. It is formed in this specific embodiment as a cylindrical element which comprises a planar front face 41, also called base area, and lateral face 43, also called lateral area. The front face 41 and the lateral face 43 are both provided with openings 8 and 9 in the form of slits inside the cover wall 24 forming the cover 3. The front face is provided with a number of teeth 17 extending from the front face in a direction parallel to an axis 700 defined by the lateral face 43.

The teeth 17 can be formed as a counter gear 42 to the teeth 18 of the activation element 6. The teeth 17 are therefore forming a toothing with the teeth 18, so that a linear motion of the activation element 6 is transformed into a rotational motion of the cover 3 by the toothing.

The teeth of cover 3 have at least two shoulders 45, 46, wherein a first of the shoulders 46 has a steeper slope than a second of the shoulders 45.

The cover 3 is slidably arranged in relation to the housing 2. Consequently, in this embodiment the cover 3 comprises an opening 44 so that the cover 3 can be put onto the housing 2.

The housing 2 is formed as a cylindrical element, which comprises a planar front face 51 and lateral face 53. The front face 51, also called base area, and the lateral face 53, also called lateral area, are both provided with openings 10 and 11, which are formed as slits inside the housing wall 23 which forms the housing 2. The openings 10 and 11 of the housing 2 have substantially the same surface as the openings 8 and 9 of the cover 3.

The front face 51 is provided with a further opening in the shape of the shaft 19 of the activation element 6. The opening 6 is provided for the receipt of the shaft 19, especially for the snap-in elements 21 and 22.

The housing 2 is provided with an opening 54 for the access to the cavity of the housing 2, which is positioned opposite the front face 51. The opening 54 is provided with a rim 55. The rim 55 is staggered with a stop face 56 and a circumferential edge 57.

The housing 2 is further provided with attachment elements 14 for attaching the air dryer in a housing of the electric system, in a flange-like manner. Each attachment element can have at least one hole 15 for the provision of a joining element such as a screw.

The staggered rim 55 is provided with an opening 13 in a central position for the reception of a projection of a snap-fit of the lid 5.

The lid 5 is shown in detail in Fig. 3e. The lid can be positioned onto the opening 54 forming an airtight connection with the staggered rim 55. The axial position of the lid 5 is determined by the stop face 56 and the lid is surrounded at the side by the circumferential edge 57.

The lid 5 is plate-shaped. At the side of the lid 5 is a snapping or latching element 16 which can form a snap-fit connection together with the opening 13 in the staggered rim 55, thus closing the opening 54 in an airtight manner and closing the cavity inside the housing 2, where a desiccant can be placed.

In the manner described above the snap-fit connection can be disengaged for an exchange of the desiccant in the cavity so that the housing can be reused.

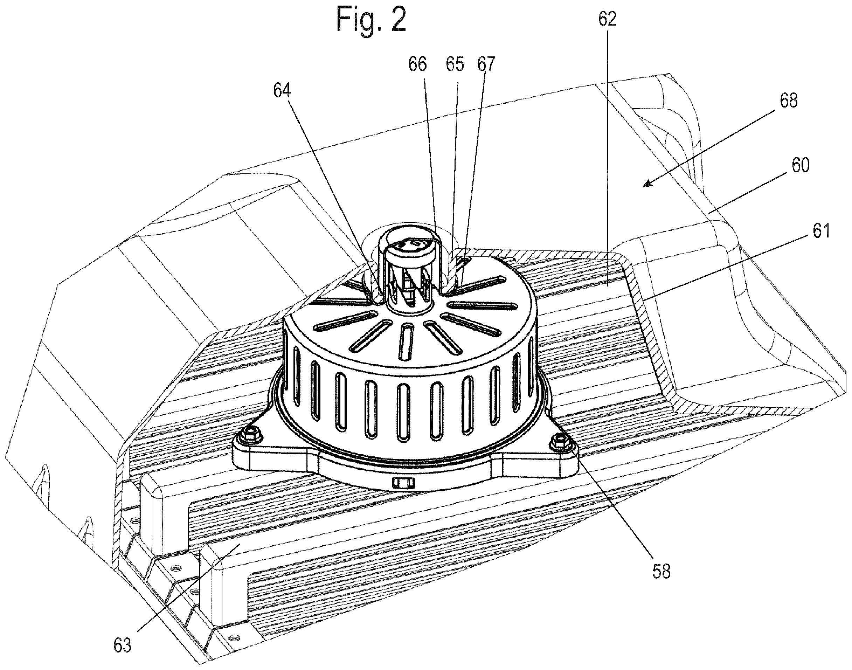

Fig. 2 shows an installation of the air dryer 1 inside the housing 60 of an electric system 68, such as a battery.

The housing 60 comprises a housing wall 61 and mounting parts 63 positioned inside a housing cavity 62. The mounting parts 63 may have the form of bridges as shown in Fig. 3. The air dryer can be positioned at the mounting parts 63 in an area between the mounting parts 63 and the housing wall 61. The air dryer can be fixed at the mounting parts 63 by the attachment elements 14 with the help of joining elements 58, for example screws. The lid 5 is positioned on the mounting parts 63. The housing 60 further comprises an opening 64 for the reception of the activation element 6 of the air dryer 1. This way the activation element 6 is accessible from the outside of the electric system.

The opening can be surrounded by a cup-shaped section 65 of the housing wall 61. The opening is closed towards the environment by a flexible sealing element 66. The sealing element 66 covers the activation element 6 and extends over the border of the opening 64, wherein the extension can preferably be a brim 67. This way the opening 64 is also closed in an airtight manner.

Fig. 4-6 show the air dryer 1 in a deactivated state 300. The toothing between the teeth 17 and 18 is not fully established. The shoulders 34 of the teeth 18 are positioned at the beginning of the corresponding shoulders of the teeth 17. The activation element 6 is in a moved-out position and the openings 8-11 of the cover 3 and the housing 2 are not in alignment. The openings 10, 11 of the housing 2 are covered. In Fig. 5 the cavity 4 of the housing 2 for the reception of the desiccant is shown.

The activation element 6 is hold in its position by the spring 7 which pushes the activation element 6 out of the housing 2 and by the snap-in element 22 which is engaging with the border 27 of the central-positioned opening 12. Since the shaft 19 of the activation element has a rectangular cross section and the central-positioned opening has also a rectangular shape, the activation element can only move linear without any skewing, torsion or rotation.

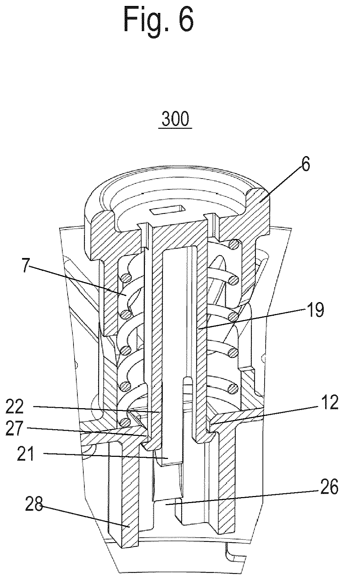

In Fig. 6 the housing wall 23 comprises a cup-shaped section 28 around the central-positioned opening for guiding the distal end section of the shaft 19 during its linear movement. The cup-shaped section 28 is provided with a recess 26 for the snap-in connection of the snap-in element 21 in an engaged position in an activated state.

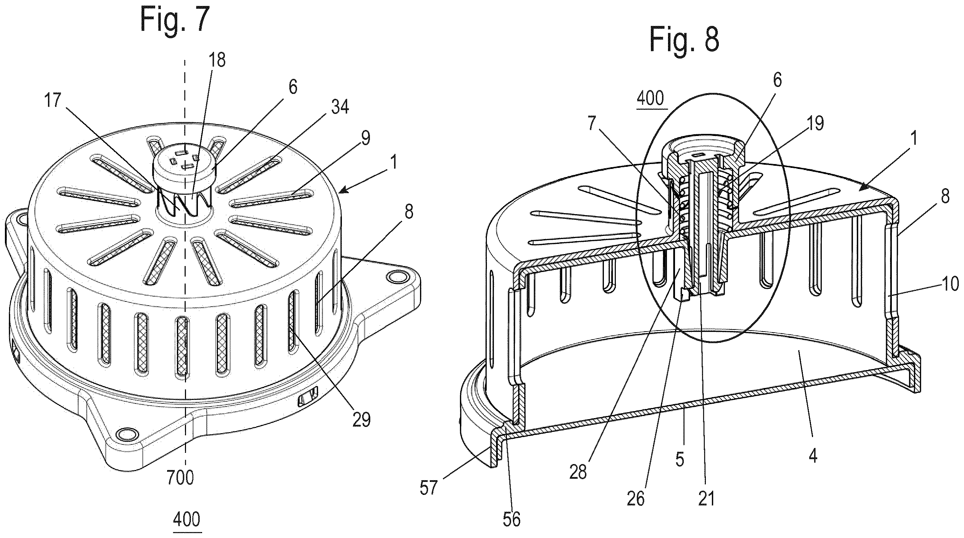

Fig. 7-9 show the air dryer 1 in an activated state 400. The toothing between the teeth 17 and 18 is fully provided so that each tooth 17 is introduced in a corresponding section between two teeth 18 of the activation element 6 to a maximum extend.

The corresponding shoulders 34 of the teeth 18 are positioned face to face to the corresponding shoulders 45 of the teeth 17.

The change between the deactivated state to the activated state can be performed by applying a pressure on the activation element 6, so that the shaft 19 moves linear to the axis 700 towards the housing. The shoulders 34 of the teeth 18 of the activation element 6 are sliding over the corresponding shoulders of the teeth 17 of the cover 3 such that a rotational movement of the cover 3 towards the stationary housing 2 is performed. This way the openings 8 and 10 as well as the openings 9 and 11 are brought into alignment allowing air to enter the cavity. In this way the air can be dried in activated state. In deactivated state the desiccant is not used and therefore not consumed.

In Fig. 7 the openings 8-11 of either the cover 3 or the housing 2 or both are provided with a grid 29 or a sieve, either made of plastic or metal. This is for example of advantage when a bulk of desiccant is placed inside the cavity or for other applications. However the grid 29 is only an option.

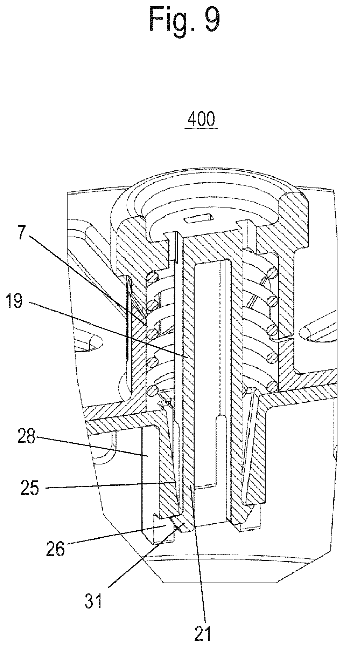

Fig. 8 and 9 show a view in which the air dryer 1 is turned by 90°. This way the recess 26 is better displayed. The cup-shaped section 28 is provided with a ramp 25 from the opening 12 to the recess 26, such that the wall thickness increases.

In this way the snapping projection 31 of the free end of the first snap-in element 21 is bend towards the middle of the shaft 19 and engages with the recess 26 due to restoring forces.

Once the activation element 6 is brought in this position the dryer can be set to the initial deactivated state by demounting the air dryer 1, opening the lid 5 and releasing the snap-in connection.

The embodiment shown in Fig. 1-9 is only one example for the invention. It is also possible that the cover is positioned inside the cavity 4 of the housing 2, covering the openings 10 and 11 from the inside.

The invention is not restricted to a cover which is rotatably arranged in relation to a housing. It is for example also possible to move the cover linear in relation to the housing in order to bring openings in both parts into alignment.

It is also possible to arrange said air dryer inside a battery housing in an activated state, wherein the activation is not performed from the outside of the battery. In this flexible sealing element. The activation of the air dryer can be done just before the battery housing is closed.

## Claims

1. Air dryer (1) for the positioning in a housing (60) of an electric system (68), in particular a battery housing,
wherein the air dryer (1) comprises a housing (2) with at least one housing wall (23), defining a reception cavity (4) for the reception of a desiccant, wherein the housing wall (23) is provided with at least one opening (10, 11);
wherein the air dryer (1) further comprises a cover (3) with at least one cover wall (24) arranged over the outer or inner surface of the housing (2) and at least partially covering the housing wall (23), wherein the cover wall (24) is provided with at least one opening (8, 9),
**characterized in that**
the cover (3) is movably arranged in relation to the housing (2) or the housing (2) is movably arranged in relation to the cover (3) with at least two positions wherein
in a first of said positions (400) the openings (8, 9, 10, 11) of the housing wall (23) and the cover wall (24) are aligned allowing air to enter and/or to leave the reception cavity (4) and
in a second of said positions (300) the openings (8, 9, 10, 11) are out of alignment to prevent air from entering the reception cavity (4).

2. Air dryer according to claim 1, **characterized in that** the cover (3) is slidably arranged in relation to the housing (2) or the housing (2) is slidably arranged in relation to the cover (3).

3. Air dryer according to claim 1 or 2, **characterized in that** the cover (3) is rotatably arranged in relation to the housing (2) or the housing (2) is rotatably arranged in relation to the cover (3).

4. Air dryer according to one of the preceding claims, **characterized in that** the openings (8, 9, 10, 11) of the housing wall (23) and/or the cover wall (24) comprise at least 5%, preferably at least 10%, of a surface area of the housing wall (23) and/or the cover wall (24), wherein preferably a plurality of openings (8-11) is foreseen.

5. Air dryer according to one of the preceding claims, **characterized in that** the housing (2) and the cover (3) have at least two sections; a base area (41, 51) and a lateral area (43, 53), wherein in both areas (41, 43, 51, 53) the walls are provided with at least one opening (8-11), preferably a plurality of openings.

6. Air dryer according to one of the preceding claims, **characterized in that** the air dryer (1) has an activation element (6) that is adapted to move the cover (3) in relation to the housing (2) from the second position (300) to the first position (400).

7. Air dryer according claim 6, **characterized in that** the activation element (6) is movable arranged for a translational movement, wherein this motion is converted to a rotational movement of the cover (3).

8. Air dryer according to claim 6, **characterized in that** the activation element (6) comprises a knob, preferably a spring-loaded knob, which is movable relative to the housing (2) and/or cover (3), wherein the knob interacts with the housing (2) and/or cover (3) preferably with a toothing (17, 18), most preferably with a spur toothing with asymmetrical tooth profile in order to move the cover (3) in relation to the housing (2) from the second position (300) to the first position (400).

9. Air dryer according to one of the preceding claims, **characterized in that** the cover (3) and the housing (2) have a cylindrical shape arranged coaxially to each other,
wherein the cover (3) and/or the housing (2) have at least one tooth (17), comprising a tooth shoulder (45), preferably an annular gear with a plurality of said teeth (17);
wherein the activation element (6) is provided with at least one tooth (18) comprising a tooth shoulder (34), preferably an annular gear with a plurality of said teeth (18);
and wherein the activation element (6) is movable linear in a direction parallel to an axis (600) of the cover (3) in a way that in a first position (400) the tooth (18) of the activation element (6) is engaged with said tooth (17) of the housing (2) and/or cover (3), wherein the shoulder (34) of said tooth (18) of the activation element (6) is slidably arranged on the shoulder (45) of said tooth (17) of the housing (2) and/or cover (3), providing a rotation movement of the cover (3) with regard to the housing (2) around the axis (700);
and wherein in a second position, the tooth (18) of the activation element (6) is disengaged from the tooth (17) of the housing (2) and/or cover (3).

10. Air dryer according to one of the preceding claims, **characterized in that** the activation element (6), in particular the knob, is provided with at least a first snap-in or latching element (22) for connecting the activation element with the housing in a deactivated state (400) of the air dryer (1) and wherein the activation element (6), in particular the knob, is provided with at least a second snap-in or latching (21) element for holding the activation element (6) in an activated state (300).

11. Air dryer according to one of the preceding claims, **characterized in that** the activation element (6), in particular the knob, is preferably provided with a rectangular shaft (19) which is positioned in an opening (64) of a housing (60) of the electric system (68).

12. Air dryer according to one of the preceding claims, **characterized in that** the housing (2) of the air dryer (1) comprises at least one attachment element (14) for attachment of the air dryer (1) in a housing (60) of an electric system (68), preferably in a flange-like manner.

13. Electric system (68), in particular battery, preferably for a vehicle, **characterized in that**, the electric system (68) comprises an electric system housing (60) with a cavity (62), wherein the air dryer (1) according to one of the preceding claims is positioned inside said cavity (62).

14. Electric system according to claim 13, **characterized in that** the air dryer (1) is positioned inside the cavity (62) with the cover (3) in said first position (400).

15. Electric system according to claim 13 or 14, **characterized in that** the electric system housing (62) is provided with an electric system opening (64) wherein the activation element (6) is positioned in relation to said opening (64) such that the activation element (6) can be operated from the outside of the electric system housing (62) of said electric system and wherein preferably the activation element (6) is gastightly arranged inside said housing (62) with respect to a gas exchange from inside to outside and vice versa.

16. Electric system according to claim 13, 14 or 15, **characterized in that** the electric system opening (64) is covered with an elastic sealing element (66) which is positioned over activation element (6), such that a pressure applied on the elastic sealing element (66) is activating the air dryer (1).

17. Production process of an electric system (68) according to one of the preceding claims, wherein the process is **characterized by** the following steps:
i. Providing parts of the housing (60) of the electric system (68);
ii. Integration of the air dryer (1) at an inner side of a housing wall (61) of the housing (60) of the electric system (68) and/or at a part of an element, especially a battery element, which is to be positioned in the battery cavity (62);
iii. Mounting of said parts of the electric system (68) to form the cavity (62) with the air dryer (1) positioned inside said cavity (62);
iv. Activation of the air dryer (1) by moving the cover (3) of the air dryer (1) from the second position (300) to the first position (400), preferably by operation from the outside of the electric system housing (62).
